# EUROPÄISCHE PATENTSCHRIFT

(11) **EP 0 899 217 B1**
(45) Veröffentlichungstag und Bekanntmachung des Hinweises auf die Patenterteilung: **06.03.2002**
(21) Anmeldenummer: 98116175.5
(22) Anmeldetag: 27.08.1998
(51) Int. Cl.: B65G 1/04

(54) **Hochregallager für hängende Waren**
High-rise storage rack for suspended goods
Rayonnage d'emmagasinage surélevé pour des marchandises suspendues

(30) Priorität: 29.08.1997 DE 29715506 U
(43) Veröffentlichungstag der Anmeldung: 03.03.1999
(73) Patentinhaber: psb GmbH Materialfluss + Logistik, 66955 Pirmasens (DE)
(72) Erfinder: Klein, Robert, 66955 Pirmasens (DE); Glänzel, Ralf, 66954 Pirmasens (DE); Dietz, Lothar, 66999 Hinterweidenthal (DE); Weber, Manfred, 66954 Pirmasens (DE); Stümper, Dieter, 66955 Pirmasens (DE)
(74) Vertreter: Patentanwälte Möll und Bitterich

(56) Entgegenhaltungen:
- CH-A- 603 447
- DE-C- 3 735 607
- DE-C- 3 807 280
- DE-U- 29 715 506
- PATENT ABSTRACTS OF JAPAN vol. 012, no. 116 (M-684), 13. April 1988 -& JP 62 244805 A (DAIFUKU CO LTD), 26. Oktober 1987

## Beschreibung

Die Erfindung betrifft Hochregallager für hängende Waren, z. B. Kleiderlager für auf Kleiderbügeln hängende Bekleidungsstücke.

Viele Waren werden in der Produktion, im Zwischenlager usw. hängend transportiert. Dies gilt auch für Bekleidungsstücke, beispielsweise Mäntel, Sakkos, Anzüge, Kostüme, Overalls usw. Diese werden in der Fabrikation, auf dem Transport, im Zwischenlager, im Endlager und im Einzelhandel auf Kleiderbügeln hängend gehandhabt. Für den Transport haben sich Hängeförderanlagen nach dem Power and free-System bewährt. Ein Beispiel einer solchen Anlage zeigt die DE-A 25 06 587. Diese Hängeförderanlagen können durch alle Etagen der Fabrik- und Lagergebäude geführt werden. Für die eigentliche Lagerung sind spezielle Pufferstrecken in die Hängeförderanlage eingebaut, die mittels Weichen an den Hauptförderstrang angekoppelt werden können.

Es ist auch schon bekannt, die Kleider gebündelt auf Laufwagen zu transportieren, die mit einer Tragstange ausgerüstet sind. Ein Beispiel zeigt die DE 38 07 280 C1. Die Tragstange ist an dem Laufwagen fest montiert und kann mit Hilfe von vollautomatischen Anlagen be- und entladen werden.

Die Pufferstrecken, in denen die mit den Kleiderbündeln beladenen Laufwagen so lange stehen, bis die Ware benötigt wird, befinden sich in aller Regel in einer einzigen Ebene. Sie beanspruchen daher eine relativ große Lagerfläche.

Aus der CH 603 447 A ist eine Trocknungsvorrichtung für Tabakblätter bekannt. Die Tabakblätter werden an Stangen befestigt. Eine Vielzahl von Stangen sind mit Hilfe zweier Seile zu einer Art Strickleiter vereinigt. Eine von einer Bedienungsperson betätigte Hubvorrichtung hebt die Strickleiter Sprosse für Sprosse in die Höhe, bis die oberste Sprosse bzw. Stange in einen Laufwagen eingehängt werden kann, der die mit Tabakblättern bestückte Einheit in einen Trockenraum fährt. Das Ein- und Auslagern einzelner Tabakblätter oder einzelner mit Tabakblättern behängter Stangen ist weder vorgesehen, noch möglich.

Aus dem Patent Abstracts of Japan, vol. 012, no. 116 (M-684), 13. April 1988 -& JP 62 244805 A (Daifuku Co Ltd), 26. Oktober 1987 ist aber auch schon eine Lösung bekannt, bei der die Schienen der Pufferstrecken in einem Hochregal angeordnet sind. Die Schienen sind senkrecht zur Lagergasse orientiert. Ein in der Lagergasse laufendes Regalbediengerät übernimmt an einer Übergabestation jeweils einen mit Hängeware beladenen Laufwagen, hebt diesen vor eine freie Schiene im Regal und schiebt Laufwagen und Hängeware auf die Regalschiene.

Nachteilig an dieser Vorrichtung ist die hohe Anzahl von Laufwagen, die in das Regal eingelagert werden. Auch muss das Regalbediengerät jedesmal das Gewicht des kompletten Laufwagens bewegen. Schließlich sind an den im Regal befestigten Schienen Vorrichtungen erforderlich, die das versehentliche Herausfallen der Laufwagen verhindern, wobei diese Vorrichtungen beim Ein- und Auslagern von Laufwagen jeweils deaktiviert werden müssen. Um ein Entgleisen der Laufwagen beim Ein- und Auslagern zu verhindern, muss die im Regalbediengerät untergebrachte Schiene jeweils sehr genau mit der Regalschiene fluchten, was sehr hohe Anforderungen an die Positioniergenauigkeit des Regalbediengeräts zur Folge hat. Schließlich erhöhen die Regalschienen das Gesamtgewicht des Regals.

Der vorliegenden Erfindung liegt die Aufgabe zugrunde, ein mit Regalen ausgerüstetes Lager für Hängeware, z. B. ein Kleiderlager, anzugeben, das eine sehr hohe Lagerkapazität besitzt, den direkten Zugriff auf die Ware erlaubt und eine sehr einfache und gleichzeitig betriebssichere Konstruktion darstellt.

Diese Aufgabe wird gelöst durch ein Hochregallager mit den Merkmalen des Anspruchs 1.

Dank der vorliegenden Erfindung kann an einer Lagerstange hängende Ware, zum Beispiel auf Kleiderbügeln hängende Kleidung, jetzt auch ohne Laufwagen in Hochregallagem gelagert werden, die bekanntermaßen die größte Lagerkapazität pro Grundfläche besitzen. Dabei kann auf die bewährten Komponenten eines solchen Hochregallagers, das sind die Regale selbst sowie die entsprechenden Regalbediengeräte, zurückgegriffen werden. Entscheidendes Konstruktionselement sind die beweglichen Lagerstangen, auf denen die Ware während des Transports auf der Hängeförderanlage und auf dem Regalbediengerät sowie während der Lagerung im Hochregal verbleibt. Dank der formschlüssigen Halterungen an den Laufwagen, den Regalbediengeräten und dem Hochregal können die Lagerstangen von mechanischen Vorrichtungen leicht umgesetzt werden. Die bekannten und bewährten Einrichtungen zur vollautomatischen Be- und Entladung der Lagerstangen können unverändert weiterverwendet werden.

Gemäß einer vorteilhaften Ausgestaltung der Erfindung bestehen die Lagerstangen aus einem Rohr mit rundem bis ovalem Querschnitt. Dieser Rohrtyp hat sich in der Praxis seit langem bestens bewährt.

Die Lagerstangen können auch aus Rohren mit polygonalem Querschnitt bestehen. Diese haben den Vorteil, dass die Haken von Kleiderbügeln an zwei Stellen aufliegen, so dass Bügel und Ware nicht um ihre Hochachse pendeln können.

Stopper auf den Lagerstangen verhindern das Ver- bzw. Abrutschen der Ware. Außerdem sorgen diese Stopper dafür, dass die Enden der Lagerstange frei bleiben, so dass die Manipulationsgeräte dort problemlos angreifen können.

Gemäß einer bevorzugten Ausgestaltung der Erfindung sind die Halterungen als U- bzw. V-förmiges Prisma ausgebildet. Diese Konstruktionen sind sehr einfach, gleichen Toleranzen problemlos aus und sind sehr betriebssicher.

Zur Erhöhung der Betriebssicherheit können die Halferungen mit korrespondierenden Fixiereinrichtungen, wie Sperrklinken, Sperrbolzen und dergleichen ausgerüstet sein. Dies gilt insbesondes für die Halterungen am Regalbediengerät, da dieses beim Anfahren und Abbremsen große Beschleunigungskräfte in der Lagerstange und der darauf hängenden Hängeware erzeugt.

Gemäß einer besonders einfachen Ausgestaltung der Erfindung besteht das Hochregallager aus Ständern, an denen die Halterungen direkt befestigt sind. Längs- und Quertraversen sind - wenn überhaupt - somit nur noch aus Gründen der Statik erforderlich.

Gemäß einer Weiterbildung besteht das Hochregallager aus Ständern und Traversen, wobei die Halterungen an den Traversen befestigt sind. Bei dieser Konstruktion kann gegebenenfalls die Zahl der Ständer reduziert werden.

Von besonderem Vorteil ist diese letztgenannte Variante, wenn auf einer Lagerebene zwei oder mehr Halterungen hintereinander angeordnet sind. In diesem Fall werden die Halterungen an den Traversen befestigt.

Die Übergabe der Lagerstangen von den Laufwagen des Hängeförderers auf das Regalbediengerät erfolgt an speziellen Übergabestationen. Damit diese Übergabe mit relativ einfachen mechanischen Vorrichtungen bewirkt werden kann, sind gemäß einer Weiterbildung der Erfindung im Bereich der Übergabestation Zentriereinrichtungen zum exakten Positionieren der Lagerstangen vorgesehen.

Vorzugsweise sind im Bereich der Übergabestation Einrichtungen zum Bewegen, Positionieren und/oder Fixieren der Laufwagen vorgesehen. Hierzu eignen sich die aus dem Stand der Technik prinzipiell bekannten Konstruktionen, die mit Ketten, Zahnriemen, Schiebern und dergleichen arbeiten. Diese können je nach Ausführungsform mit Elektromotoren, Pneumatikzylindem und dergleichen angetrieben werden.

Vorteilhafterweise sind im Bereich der Übergabestationen Seitenschilder bzw. Schutzbleche und eine integrierte Sensorik für die Steuerung der Feinpositionierung der Laufwagen bzw. Lagerstangen vorgesehen.

Gemäß einer Ausgestaltung der Erfindung besitzt das Regalbediengerät wenigstens einen Teleskopausleger, an dem wenigstens eine Einrichtung zum Halten einer Lagerstange vorgesehen ist. Mit einem solchen Teleskopausleger kann vom Regalbediengerät aus, welches in der Mitte der Lagergasse läuft, nach rechts und links in die Lagerfächer hineingegriffen werden, und zwar auch dann, wenn mehrere Halterungen und Lagerstangen in einer Lagerebene hintereinander angeordnet sind.

Gemäß einer ersten Variante umfasst der Teleskopausleger im wesentlichen eine Grundplatte, die am Hubwagen des Regalbediengerätes befestigt wird, einen Teleskoprahmen unter der Grundplatte, einen einfachen oder doppelten Teleskopauszug am Teleskoprahmen, eine am Teleskopauszug gelagerte, separat verfahrbare Übernahmeeinheit mit den Einrichtungen zum Halten einer Lagerstange, einen Antriebsmotor für den Teleskopauszug und einen Antriebsmotor für die Übernahmeeinheit. Der einfache Teleskopauszug genügt, wenn die Lagerstangen mit der Ware nur einreihig hängen. Hängt die Ware dagegen in zwei Reihen hintereinander, so ist ein doppelter Teleskopauszug erforderlich.

Dank der am Teleskopauszug gelagerten und separat verfahrbaren Übernahmeeinheit kann die Lagerstange mit der daran hängenden Ware stets in die Mitte des Regalbediengeräts gefahren werden, wo die Ware den maximalen Abstand zu den beiden benachbarten Regalen hat.

Gemäß einer Weiterbildung der Erfindung befindet sich zwischen Grundplatte und Teleskoprahmen ein Drehkranz, der von einem Antriebsmotor gedreht wird. Dank des Drehkranzes können Teleskopausleger und Übernahmeeinheit nach rechts oder links geschwenkt werden. Es ist sogar möglich, eine Lagerstange mit Ware auf der einen Seite aufzunehmen und während der Fahrt des Regalbediengerätes auf die andere Seite zu drehen, beispielsweise um Lagerstange und Ware dort in ein leeres Regalfach einzulagern. Dies beschleunigt den Arbeitsablauf entscheidend.

Um zu verhindern, dass die Übernahmeeinheit beim Herausheben einer gefüllten Lagerstange aus dem Regal die hängende Ware beschädigt oder herunterwirft, sind an der Übernahmeeinheit rechts und links Zentrierplatten befestigt, die so geformt sind, dass sie eine Art Trichter bilden. Die Einrichtungen zum Halten einer Lagerstange befinden sich an den Zentrierplatten, bevorzugt an deren Oberkante. Die Zentrierplatten schieben die Ware in die Mitte der Lagerstange und fixieren die Ware zusätzlich während des Ein- und Auslagerns derselben sowie während der Fahrt des Regalbediengerätes.

Gemäß einer zweiten Variante besteht der Teleskopausleger aus einer flachen Teleskopplatte, die die Lagerstange/n überfährt. In diesem Fall sind als Halterungen Haken- oder Scherengreifer vorgesehen, die die Lagerstange/n von oben fassen. Vorteilhaft an dieser Variante ist, dass der Raum über den Lagerstange/n über die gesamte Stangenbreite völlig frei ist, so dass keine Kollision zu befürchten ist mit Ware, die nicht ganz korrekt auf der Lagerstange hängt.

Da Regalbediengeräte mit relativ hohen Beschleunigungswerten anfahren und bremsen, geraten die auf dem Regalbediengerät mitgeführten Kleiderbündel in Schwingungen. Um zu verhindern, dass sie mit den Hochregalen kollidieren oder herunterfallen, wird am Regalbediengerät vorteilhafterweise eine Halte- und Schutzvorrichtung angebracht, die die Ware während der Fahrt fixiert.

Die Halte- und Schutzvorrichtung umfasst einen Rolladen, der leicht und vor allem platzsparend aufzurollen ist, eine Schiebe- oder Schwenktür, die sich durch wenige bewegte Teile auszeichnet, oder ein Schutzgitter, das vor den Stirnflächen der Ware auch starr montiert sein kann.

Um die Leistungsfähigkeit des Regalbediengerätes zu erhöhen bzw. um bei einer Lagerung der Ware in mehreren Reihen hintereinander auch direkt auf die hinten hängende Waren zugreifen zu können, empfiehlt es sich, am Regalbediengerät zwei oder mehr Teleskopausleger anzubringen.

Als Hängeware kommen nicht nur Bekleidungsstücke in Betracht, sondern beispielsweise auch Gitterboxen. Dabei ist je eine Gitterbox mit einer Tragstange verbunden, gegebenenfalls über ein zwischengeschaltetes Gelenk. Die Gitterboxen können mit einer Klapptür versehen sein und Lagerfächer enthalten, so dass sie Liegeware aufnehmen können, die dann im Hochregallager hängend deponiert wird.

Dabei empfiehlt es sich, am Regalbediengerät einen weiteren Teleskopausleger anzubringen, der die Gitterbox unterfährt und ein Pendeln derselben verhindert.

Anhand der Zeichnung soll die Erfindung in Form von Ausführungsbeispielen näher erläutert werden. Es zeigen
- Fig. 1: rein schematisch eine perspektivische Darstellung eines Hochregallagers für hängende Waren,
- Fig. 2: einen Ausschnitt aus einer Hängeförderanlage mit Laufwagen,
- Fig. 3: eine Lagerstange,
- Fig. 4: eine Draufsicht auf einen Ausschnitt aus einem Hochregellager für auf Kleiderbügeln hängende Ware,
- Fig. 5: eine Frontansicht eines einreihigen Kleiderhochregallagers,
- Fig. 6: eine Frontansicht eines Ausschnitts aus einem zweireihigen Kleiderhochregallager,
- Fig. 7: eine Übergabestation mit einer Positionier- und Zentriereinrichtung,
- Fig. 8: eine Hängeware in Form einer Gitterbox und
- Fig. 9: ein Regalbediengerät mit ganz ausgefahrenem Teleskopausleger während der Aufnahme einer Lagerstange mit Ware.

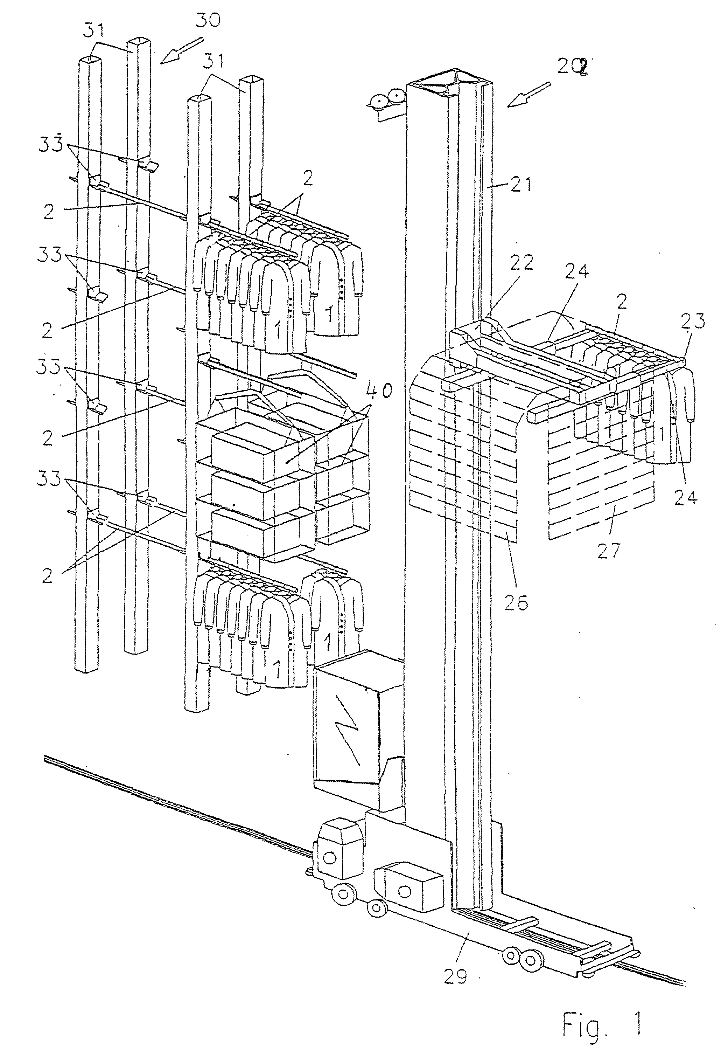

Fig. 1 zeigt rein schematisch und in perspektivischer Darstellung einen Ausschnitt aus einem Hochregallager für hängende Ware 1, 40. Man erkennt ein Hochregal 30 mit beispielsweise vier Lagerebenen. Das Ein- und Auslagern der Ware 1, 40 geschieht mit Hilfe eines Regalbediengerätes 20, das wie bekannt in der Lagergasse zwischen zwei Hochregalen 30 läuft.

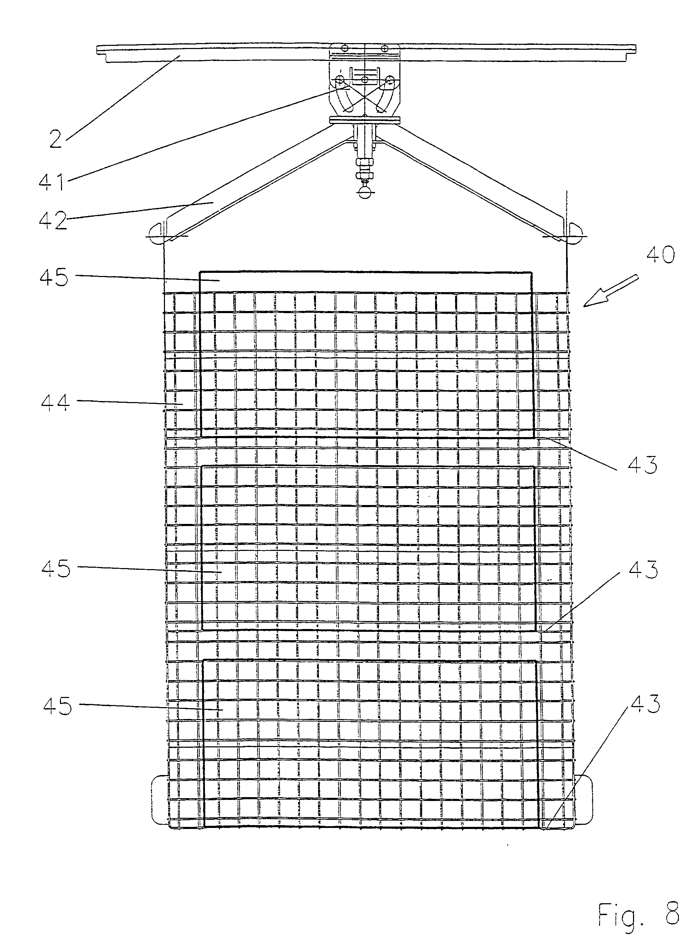

Als Beispiele für hängende Waren sind Kleidungsstücke 1, die auf Kleiderbügeln an einer Lagerstange 2 hängen, und Gitterboxen 40, die anhand der Fig. 8 noch näher erläutert werden, gezeichnet. Auf den Lagerstangen 2 bleiben die Waren 1, 40 so lange wie möglich. Die Lagerstange 2 bildet das stabile Glied, das das Handling erst ermöglicht.

Wie Fig. 1 zeigt, besteht das Hochregal 30 lediglich aus Ständern 31, an denen Halterungen 33, hier in Form von V-förmigen Prismen, angebracht sind. Gegebenenfalls können auch korrespondierende Fixiereinrichtungen wie Sperrklinken, Sperrbolzen und dergleichen angebracht werden. Längs- oder Quertraversen sind entbehrlich, können aber angebracht werden, wenn die Statik es verlangt.

Das Regalbediengerät 20 umfasst in an sich bekannter Weise ein Fahrwerk 29, auf dem ein Mast 21 mit einem Hubwagen 22 errichtet ist. Am Hubwagen 22 sind zwei Teleskoparme 24 angebracht. An den Spitzen der Teleskoparme 24 befindet sich je eine Halterung 23 für eine Lagerstange 2. Die Halterung 23 kann ebenfalls als V-förmiges Prisma ausgebildet sein. Gegebenenfalls können auch korrespondierende Fixiereinrichtungen wie Sperrklinken, Sperrbolzen und dergleichen angebracht werden.

Damit die Ware 1, 40 beim Anfahren und Bremsen nicht in Schwingungen gerät und mit dem Regalbediengerät 20 oder dem Hochregal 30 kollidiert, ist am Hubwagen 22 eine Halte- und Schutzvorrichtung angebracht. Diese besteht beispielsweise aus einem stirnseitig fest angebrachten Schutzgitter 27 und seitlich aus je einem auf- und abrollbaren Rolladen 26. Die Rolladenführungen sowie die Auf- und Abwickelmechanik sind der Übersichtlichkeit halber nicht dargestellt.

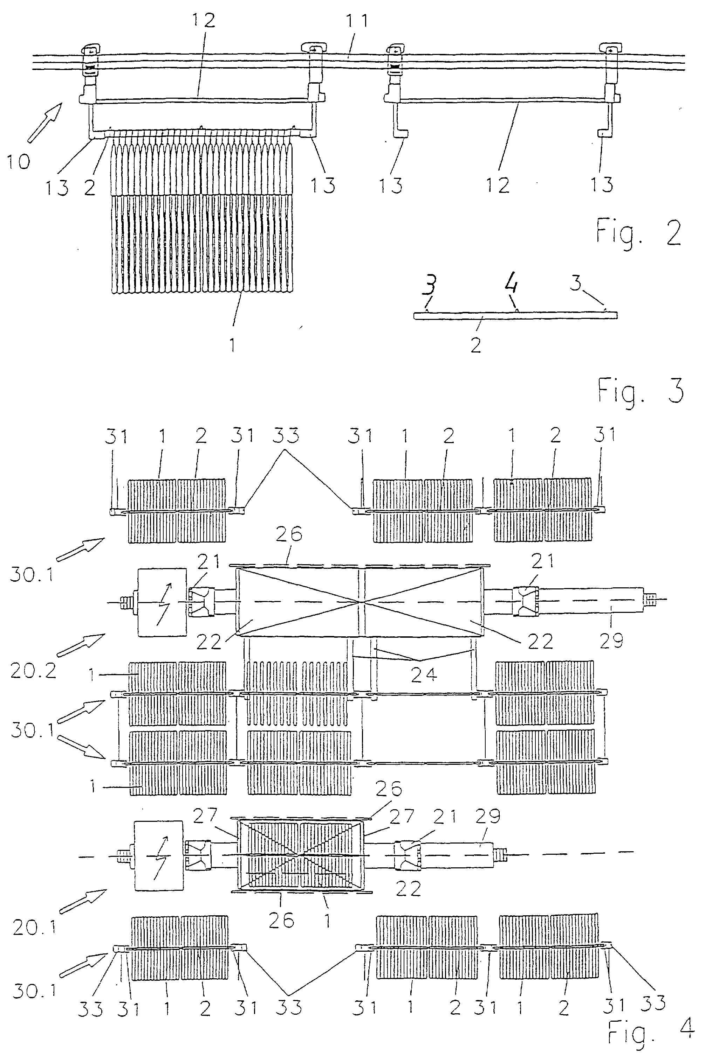

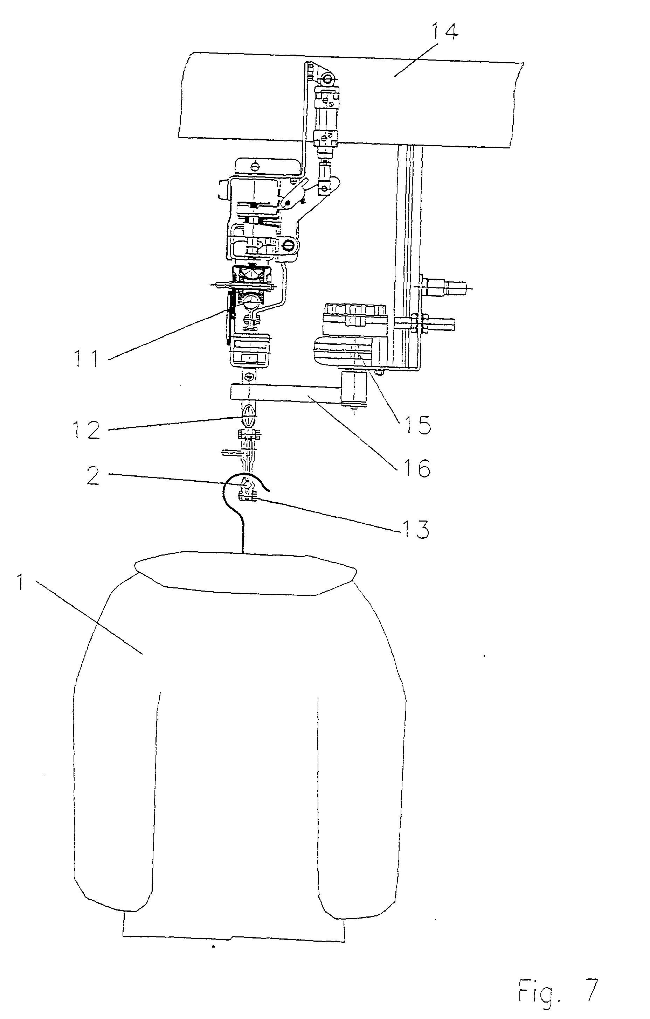

Fig. 2 zeigt einen Ausschnitt aus einer Hängeförderanlage, mit deren Hilfe die auf den Lagerstangen 2 hängende Ware 1, 40 dem Regalbediengerät 20 zugeführt bzw. von diesem wieder abgeführt wird. Dies geschieht an speziellen Übergabestationen, üblicherweise am Kopfende der Lagergassen. Dort sind auch Seitenschilder oder Schutzbleche (nicht dargestellt) vorgesehen sowie eine integrierte Sensorik zwecks Steuerung der Feinpositionierung der Laufwagen (sieht Fig. 7).

An einer Laufschiene 11 hängen Laufwagen 12 an sich bekannter Konstruktion. Diese sind mit Halterungen 13 ausgerüstet, beispielsweise wieder in Form von V-förmigen Prismen, in die je eine Lagerstange 2 eingehängt werden kann.

Fig. 3 zeigt eine leere Lagerstange 2. An ihrer Oberseite sind rechts und links Stopper 3 angebracht, die dafür sorgen, dass die Enden der Lagerstange 2 frei bleiben und die Ware 1 nicht herunterrutschen kann. Ein weiterer Stopper 4 in der Mitte der Lagerstange 2 verhindert ein Verrutschen der Ware 1, 40, wenn die Lagerstange 2 nur teilweise behängt ist.

Fig. 4 zeigt eine Draufsicht auf ein Kleiderhochregallager mit einreihiger Hängung der Waren 1. Man erkennt die Ständer 31 und die daran befestigten prismatischen Halterungen 33, die die Lagerstangen 2 formschlüssig halten. In den Lagergassen zwischen zwei Hochregalen 30.1 läuft je ein Regalbediengerät 20.1, 20.2. Das in der unteren Lagergasse laufende Regalbediengerät 20.1 besitzt nur einen Hubwagen 22, der mit einem Warenbündel 1 beladen ist. Die Halte- und Schutzvorrichtungen 26, 27 sind inaktiv.

Das in der oberen Lagergasse laufende Regalbediengerät 20.2 besitzt zwei Hubwagen 22 mit jeweils einem Paar von Teleskoparmen 24. Diese sind ausgefahren, um Lagerstangen 2 ein- oder auszulagern.

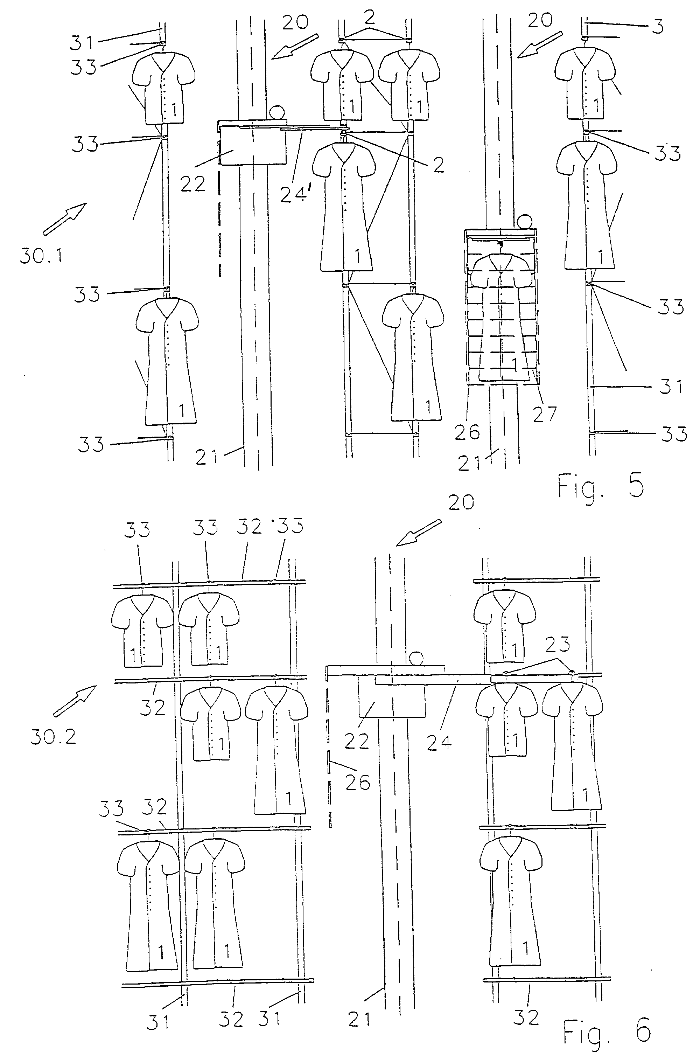

Fig. 5 zeigt einen Ausschnitt aus einem weiteren Hochregallager als Frontansicht. Man erkennt vier Hochregale 30.1 mit einreihiger Hängung der Ware 1 und je ein Regalbediengerät 20 in den Lagergassen. Das in der rechten Lagergasse laufende Regalbediengerät 20 ist mit Ware 1 beladen. Die Halte- und Schutzvorrichtungen 26, 27 sind aktiv.

Bei dem in der linken Lagergasse laufenden Regalbediengerät 20 ist der Teleskopausleger 24' ausgefahren, um eine mit Ware 1 behängte Lagerstange 2 ein- oder auszulagern. Der Teleskopausleger 24' besteht aus einer flachen Teleskopplatte, die die Lagerstange/n 2 überfährt und dabei den Freiraum zwischen der Lagerstange 2 und der in der nächst höheren Lagerebene hängenden Ware 1 ausnützt. Unter der Teleskopplatte 24' sind Haken- oder Scherengreifer vorgesehen (nicht dargestellt), die die Lagerstange 2 von oben greifen.

Fig. 6 zeigt als Frontansicht einen Ausschnitt aus einem Hochregallager mit Hochregalen 30.2, in denen die Ware 1 in zwei Reihen hintereinander hängt. An den Regalständem 31 sind Traversen 32 befestigt, an denen die Halterungen 33 für die Lagerstangen 2 angebracht sind. Das in der Lagergasse laufende Regalbediengerät 20 ist mit einem Teleskopausleger 24 versehen, der die Lagerstangen 2 untergreift und auf seiner Oberseite zwei Aufnahmen 23 für je eine Lagerstange 2 besitzt. Bei dieser Variante können somit zwei Lagerstangen 2 auf einmal ein- und ausgelagert werden.

Fig. 7 zeigt einen Querschnitt durch die Hängeförderanlage im Bereich einer Übergabestation. Man erkennt die Laufschiene 11, die unter einem Schienenträger 14 montiert ist. An der Laufschiene 11 hängt ein Laufwagen 12 mit einer an der Haltevorrichtung 13 eingehängten Lagerstange 2, an der ein Kleiderbügel mit Kleidungsstück 1 hängt. An dem Schienenträger 14 ist des weiteren eine Positionier- und Zentriereinrichtung vorgesehen, bestehend aus einem Schwenkantrieb 15 und einem Schwenkarm 16, die die Laufwagen 12 exakt positioniert. Der Schwenkantrieb 15 wird durch eine integrierte Sensorik in Form von Schaltern, Lichtschranken, magnetischen Initiatoren oder dergleichen angesteuert (nicht dargestellt).

Fig. 8 zeigt als Beispiel für eine weitere Hängeware die Gitterbox 40, die mit Hilfe eines Aufhängers 42 und eines Gelenks 41 an der Lagerstange 2 montiert ist. Die Gitterbox 40 besitzt drei Lagerböden 43 und kann daher drei Stück Liegeware, z. B. Kartons 45, aufnehmen. Eine Klapptür 44 ermöglicht das Ein- und Auslagern der Liegeware oder Kartons 45.

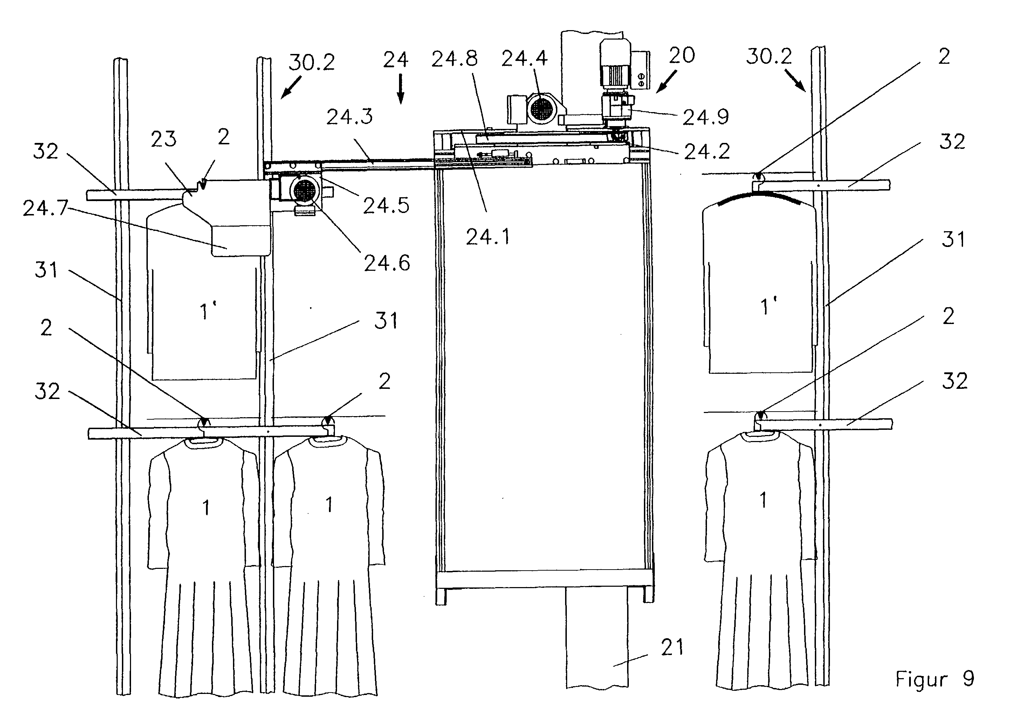

Fig. 9 zeigt einen Ausschnitt aus einem Regalbediengerät 20 in der Lagergasse zwischen zwei Regalen 30.2, in denen die Ware 1, 1' in zwei Reihen hintereinander hängt. Am Mast 21 des Regalbediengerätes 20 ist eine Grundplatte 24.1 befestigt. Unter dieser befindet sich ein Drehkranz 24.8, der von einem Motor 24.9 angetrieben wird. Unter dem Drehkranz 24.8 ist ein Teleskoprahmen 24.2 befestigt, an dem ein doppelter Teleskopauszug 24.3 montiert ist. Der Antrieb des Teleskopauszugs 24.3 erfolgt mit Hilfe eines Antriebsmotors 24.4.

Unter dem Teleskopauszug 24.3 ist eine separat verfahrbare Übernahmeeinheit 24.5 gelagert, die von einem Antriebsmotor 24.6 bewegt wird. An der Übernahmeeinheit 24.5 ist rechts und links eine Zentrierplatte 24.7 befestigt. Diese Zentrierplatten 24.7 sind so geformt, dass sie eine Art Trichter bilden, der die auf der Lagerstange 2 hängende Ware 1, 1' zentriert und hält. Die Einrichtung 23 zum Halten der Lagerstange 2 befindet sich an der Oberkante der Zentrierplatten 24.7.

Sobald die Lagerstange 2 mit der daran hängenden Ware 1' auf den Zentrierplatten 24.7 hängt, wird der doppelte Teleskopauszug 24.3 wieder eingezogen. Gleichzeitig fährt die separat vefahrbare Übernahmeeinheit 24.5 ebenfalls zurück, bis die Lagerstange 2 mit der daran hängenden Ware 1' sich in der Mitte des Regalbediengeräts 20 befindet, wo sie zu den beiden Regalen 30.2 mit der daran hängenden Ware 1,1' den optimalen Abstand hat.

## Patentansprüche

1. Hochregallager für Hängeware (1, 40), im wesentlichen umfassend
- Hängeförderer (10) mit auf Schienen (11) laufenden Laufwagen (12),
- wenigstens ein Hochregal (30, 30.1, 30.2),
- Regalbediengeräte (20, 20.1, 20.2), die das Hochregal (30, 30.1, 30.2) be- und entladen,
- und Lagerstangen (2), die die Ware (1) während Transport und Lagerung aufnehmen,
**gekennzeichnet durch** die Merkmale:
- die Lagerstangen (2) sind zwischen den Laufwagen (12), den Regalbediengeräten (20, 20.1, 20.2) und dem Hochregal (30, 30.1, 30.2) Umsetzbar,
- die Laufwagen (12), die Regalbediengeräte (20, 20.1, 20.2) und das Hochregal (30, 30.1, 30.2) sind mit Halterungen (13, 23, 33) ausgerüstet, die die Lagerstangen (2) formschlüssig fixieren.

2. Hochregallager nach Anspruch 1, **gekennzeichnet durch** das Merkmal:
- die Lagerstangen (2) bestehen aus einem Rohr mit rundem bis ovalem oder polygonalem Querschnitt.

3. Hochregallager nach Anspruch 1 oder 2, **gekennzeichnet durch** das Merkmal:
- Stopper (3, 4) auf den Lagerstangen (2) verhindern das Ver- bzw. Abrutschen der Ware (1).

4. Hochregallager nach Anspruch 1, 2 oder 3, **gekennzeichnet durch** das Merkmal:
- die Halterungen (13, 23, 33) sind als U- bzw. V-förmiges Prisma ausgebildet.

5. Hochregallager nach einem der Ansprüche 1 bis 4, **gekennzeichnet durch** das Merkmal:
- die Halterungen (13, 23, 33) sind mit korrespondierenden Fixiereinrichtungen wie Sperrklinken, Sperrbolzen und dergleichen ausgerüstet.

6. Hochregallager nach Anspruch 1, **gekennzeichnet durch** die Merkmale:
- die Regale (30) bestehen aus Ständern (31),
- die Halterungen (33) sind direkt an den Ständern (31) befestigt.

7. Hochregallager nach Anspruch 1, **gekennzeichnet durch** die Merkmale:
- die Regale (30.1, 30.2) bestehen aus Ständern (31) und Traversen (32),
- die Halterungen (33) sind an den Ständern (31) und/oder Traversen (32) befestigt.

8. Hochregallager nach einem der Ansprüche 1 bis 7, **gekennzeichnet durch** das Merkmal:
- auf einer Lagerebene sind zwei oder mehr Halterungen (33) hintereinander angeordnet.

9. Hochregallager nach Anspruch 1, **gekennzeichnet durch** die Merkmale:
- am Hängeförderer (10) sind Übergabestationen vorgesehen,
- im Bereich der Übergabestationen sind an den Laufschienen (11) Einrichtungen (15, 16) zum exakten Positionieren der Lagerstangen (2) vorgesehen.

10. Hochregallager nach Anspruch 9, **gekennzeichnet durch** das Merkmal:
- im Bereich der Übergabestationen sind Einrichtungen (15, 16) zum Bewegen, Positionieren und/oder Fixieren der Laufwagen (12) vorgesehen.

11. Hochregallager nach Anspruch 9 oder 10, **gekennzeichnet durch** die Merkmale:
- im Bereich der Übergabestationen sind vorgesehen
-- Seitenschilder bzw. Schutzbleche
-- und eine integrierte Sensorik für die Steuerung der Feinpositionierung der Laufwagen (12) bzw. Lagerstangen (2).

12. Hochregallager nach Anspruch 1, **gekennzeichnet durch** die Merkmale:
- das Regalbediengerät (20, 20.1, 20.2) besitzt wenigstens einen Teleskopausleger (24, 24'),
- am Teleskopausleger (24, 24') ist wenigstens eine Einrichtung (23) zum Halten einer Lagerstange (2) vorgesehen.

13. Hochregallager nach Anspruch 12, **gekennzeichnet durch** die Merkmale:
- der Teleskopausleger (24) umfasst im wesentlichen
-- eine Grundplatte (24.1),
-- einen Teleskoprahmen (24.2) unter der Grundplatte (24.1),
-- einen einfachen oder doppelten Teleskopauszug (24.3) am Teleskoprahmen (24.2),
-- eine am Teleskopauszug (24.3) gelagerte, separat verfahrbare Übernahmeeinheit (24.5) mit den Einrichtungen (23) zum Halten einer Lagerstange (2),
-- einen Antriebsmotor (24.4) für den Teleskopauszug
-- und einen Antriebsmotor (24.6) für die Übernahmeeinheit (24.5).

14. Hochregallager nach Anspruch 13, **gekennzeichnet durch** die Merkmale:
- zwischen Grundplatte (24.1) und Teleskoprahmen (24.2) befindet sich ein Drehkranz (24.8),
- ein Antriebsmotor (24.9) dreht den Drehkranz (24.8) mit den daran befestigten Teilen (24.2 ... 24.7).

15. Hochregallager nach Anspruch 12, 13 oder 14, **gekennzeichnet durch** die Merkmale:
- an der Übernahmeeinheit (24.5) befinden sich rechts und links eine Art Trichter bildende Zentrierplatten (24.7),
- die Einrichtungen (23) zum Halten einer Lagerstange (2) befinden sich an den Zentrierplatten (24.7).

16. Hochregallager nach Anspruch 12, **gekennzeichnet durch** die Merkmale:
- der Teleskopausleger besteht aus einer flachen Teleskopplatte (24'), die die Lagerstange/n (2) überfährt,
- als Halterungen sind Haken- oder Scherengreifer vorgesehen.

17. Hochregallager nach Anspruch 12, **gekennzeichnet durch** die Merkmale:
- am Regalbediengerät (20, 20.1, 20.2) ist eine Halte- und Schutzvorrichtung (26, 27) angebracht, die die Ware (1) während der Fahrt fixiert,
- die Halte- und Schutzvorrichtung umfasst einen Rolladen (26), eine Schiebe- oder Schwenktür oder ein Schutzgitter (27).

18. Hochregallager nach Anspruch 12, **gekennzeichnet durch** das Merkmal:
- an einem Regalbediengerät (20.2) sind zwei oder mehr Teleskopausleger (24, 24') angebracht.

19. Hochregallager nach Anspruch 1 oder 2, **gekennzeichnet durch** die Merkmale:
- an der Lagerstange (2) ist ein Gelenk (41) befestigt,
- an dem Gelenk (41) hängt eine Gitterbox (40),
- die Gitterbox (40) besitzt Lagerböden (43) und eine Klapptür (44).

20. Hochregallager nach Anspruch 19, **gekennzeichnet durch** das Merkmal:
- am Regalbediengerät (20, 20.1, 20.2) ist ein weiterer Teleskopausleger untergebracht, der die Gitterbox (40) unterfährt und so ein Pendeln verhindert.

## Claims

1. High-rise rack storage system for suspended goods (1, 40), essentially comprising
- suspended conveyors (10) with carriages (12) running on rails (11),
- at least one high-rise rack (30, 30.1, 30.2),
- insertion and retrieval appliances (20, 20.1. 20.2), which load and unload the high-rise rack (30, 30.1, 30.2),
- and storage rods (2), which hold the goods (1) during transport and storage,
**characterised by** the features:
- the storage rods (2) can be transferred between the carriages (12), the insertion and retrieval appliances (20, 20.1, 20.2) and the high-rise rack (30, 30.1, 30.2),
- the carriages (12), the insertion and retrieval appliances (20, 20.1, 20.2) and the high-rise rack (30, 30.1, 30.2) are equipped with mounts (13, 23, 33), which positively fix the storage rods (2).

2. High-rise rack storage system according to Claim 1, **characterised by** the feature:
- the storage rods (2) consist of a tube with a round to oval or polygonal cross section.

3. High-rise rack storage system according to Claim 1 or 2, **characterised by** the feature:
- stoppers (3, 4) on the storage rods (2) prevent the goods (1) from slipping to one side or slipping off.

4. High-rise rack storage system according to Claim 1, 2 or 3, **characterised by** the feature:
- the mounts (13, 23, 33) are formed as a U- or V-shaped prism.

5. High-rise rack storage system according to any one of Claims 1 to 4, **characterised by** the feature:
- the mounts (13, 23, 33) are equipped with corresponding fixing devices such as locking pawls, locking pins and similar.

6. High-rise rack storage system according to Claim 1, **characterised by** the features:
- the racks (30) consist of uprights (31),
- the mounts (33) are secured directly to the uprights (31).

7. High-rise rack storage system according to Claim 1, **characterised by** the features:
- the racks (30.1, 30.2) consist of uprights (31) and cross members (32),
- the mounts (33) are secured to the uprights (31) and/or cross members (32).

8. High-rise rack storage system according to any one of Claims 1 to 7, **characterised by** the feature:
- two or more mounts (33) are disposed one behind the other in a storage plane.

9. High-rise rack storage system according to Claim 1, **characterised by** the features:
- delivery stations are provided at the suspended conveyor (10),
- devices (15, 16) for exactly positioning the storage rods (2) are provided at the rails (11) in the region of the delivery stations.

10. High-rise rack storage system according to Claim 9, **characterised by** the feature:
- devices (15, 16) for moving, positioning and/or fixing the carriages (12) are provided in the region of the delivery stations.

11. High-rise rack storage system according to Claim 9 or 10, **characterised by** the features:
- side shields or guard plates
- and an integrated sensor system for controlling the fine positioning of the carriages (12) or storage rods (2) are provided in the region of the delivery stations.

12. High-rise rack storage system according to Claim 1, **characterised by** the features:
- the insertion and retrieval appliance (20, 20.1, 20.2) has at least one telescopic cantilever (24, 24'),
- at least one device (23) for holding a storage rod (2) is provided at the telescopic cantilever (24, 24').

13. High-rise rack storage system according to Claim 12, **characterised by** the features:
- the telescopic cantilever (24) essentially comprises
- a base plate (24.1),
- a telescopic frame (24.2) below the base plate (24.1),
- a single or double telescopic extension (24.3) at the telescopic frame (24.2),
- a take-over unit (24.5), which is mounted at the telescopic extension (24.3) and can travel separately, with the devices (23) for holding a storage rod (2),
- a drive motor (24.4) for the telescopic extension
- and a drive motor (24.6) for the take-over unit (24.5).

14. High-rise rack storage system according to Claim 13, **characterised by** the features:
- a turn-table (24.8) is located between the base plate (24.1) and the telescopic frame (24.2),
- a drive motor (24.9) rotates the turn-table (24.8) with the parts (24.2 ... 24.7) secured thereto.

15. High-rise rack storage system according to Claim 12, 13 or 14, **characterised by** the features:
- centring plates (24.7) forming a type of hopper are located on the right and the left at the take-over unit (24.5),
- the devices (23) for holding a storage rod (2) are located at the centring plates (24.7).

16. High-rise rack storage system according to Claim 12, **characterised by** the features:
- the telescopic cantilever consists of a flat telescopic plate (24'), which passes over the storage rod/s (2),
- hook-type or scissor-type grippers are provided as mounts.

17. High-rise rack storage system according to Claim 12, **characterised by** the features:
- a holding and protective apparatus (26, 27) is attached to the insertion and retrieval appliance (20, 20.1, 20.2), which apparatus fixes the goods (1) when in motion,
- the holding and protective apparatus comprises a roller blind (26), a sliding or hinged door or a protective grid (27).

18. High-rise rack storage system according to Claim 12, **characterised by** the feature:
- two or more telescopic cantilevers (24, 24') are attached to the storage and retrieval appliance (20.2).

19. High-rise rack storage system according to Claim 1 or 2, **characterised by** the features:
- a hinge joint (41) is secured to the storage rod (2),
- a skeleton container (40) is suspended from the hinge joint (41),
- the skeleton container (40) has storage floors (43) and a drop door (44).

20. High-rise rack storage system according to Claim 19, **characterised by** the feature:
- a further telescopic cantilever is accommodated at the insertion and retrieval appliance (20, 20.1, 20.2), which cantilever passes under the skeleton container (40) and thus prevents swinging.

## Revendications

1. Stockage en rayonnages verticaux pour marchandises à suspendre (1, 40), comprenant sensiblement
- un convoyeur suspendu (10) muni de chariots (12) mobiles sur des rails (11),
- au moins un rayonnage vertical (30, 30.1, 30.2),
- des gerbeurs (20, 20.1, 20.2) pour charger et décharger le rayonnage vertical (30, 30.1, 30.2),
- et des barres de stockage (2) destinées à recevoir les marchandises (1) pendant le transport et le stockage,
**caractérisé par** les caractéristiques :
- les barres de stockage (2) peuvent être transposées entre les chariots (12), les gerbeurs (20, 20.1, 20.2) et le rayonnage vertical (30, 30.1, 30.2),
- les chariots (12), les gerbeurs (20, 20.1, 20.2) et le rayonnage vertical (30, 30.1, 30.2) sont équipés de fixations (13, 23, 33) qui bloquent par conjugaison de forme les barres de stockage (2).

2. Stockage en rayonnages verticaux selon la revendication 1, **caractérisé par** la caractéristique :
- les barres de stockage (2) sont formées par un tube avec une section ronde ovale ou polygonale.

3. Stockage en rayonnages verticaux selon la revendication 1 ou 2, **caractérisé par** la caractéristique :
- des butées (3, 4) sur les barres de stockage (2) empêchent le glissement et la chute de la marchandise (1).

4. Stockage en rayonnages verticaux selon la revendication 1, 2 ou 3, **caractérisé par** la caractéristique :
- les fixations (13, 23, 33) sont conçues en forme de prismes en U ou en V.

5. Stockage en rayonnages verticaux selon l'une quelconque des revendications 1 à 4, **caractérisé par** la caractéristique :
- les fixations (13, 23, 33) sont équipées d'éléments de blocage correspondants, tels que des cliquets d'arrêt, des boulons de blocage ou des éléments analogues.

6. Stockage en rayonnages verticaux selon la revendication 1, **caractérisé par** les caractéristiques :
- les rayonnages (30) sont formés par des montants (31),
- les fixations (33) sont fixées directement contre les montants (31).

7. Stockage en rayonnages verticaux selon la revendication 1, **caractérisé par** les caractéristiques :
- les rayonnages (30.1, 30.2) sont formés par des montants (31) et des traverses (32),
- les fixations (33) sont fixées directement aux montants (31) et/ou aux traverses (32).

8. Stockage en rayonnages verticaux selon l'une quelconque des revendications 1 à 7, **caractérisé par** la caractéristique :
- deux ou plusieurs fixations (33) sont disposées les unes derrière les autres sur un même plan de stockage.

9. Stockage en rayonnages verticaux selon la revendication 1, **caractérisé par** les caractéristiques :
- des postes de transfert sont prévus sur le convoyeur suspendu (10),
- des dispositifs (15, 16), destinés à positionner exactement les barres de stockage (2), sont prévus sur les rails (11) dans la zone des postes de transfert.

10. Stockage en rayonnages verticaux selon la revendication 9, **caractérisé par** la caractéristique :
- des dispositifs (15, 16), destinés à déplacer, positionner et/ou bloquer les chariots (12), sont prévus dans la zone des postes de transfert.

11. Stockage en rayonnages verticaux selon la revendication 9 ou 10, **caractérisé par** les caractéristiques :
- il est prévu dans la zone des postes de transfert
-- des plaques latérales ou plaques de protection,
-- et une unité de capteurs intégrée, destinée à commander la position précise des chariots (12) ou des barres de stockage (2).

12. Stockage en rayonnages verticaux selon la revendication 1, **caractérisé par** les caractéristiques :
- le gerbeur (20, 20.1, 20.2) comporte au moins un bras télescopique (24, 24'),
- au moins un dispositif (23) destiné à supporter une barre de stockage (2) est prévu sur le bras télescopique (24, 24').

13. Stockage en rayonnages verticaux selon la revendication 12, **caractérisé par** les caractéristiques :
- le bras télescopique (24) comporte sensiblement :
-- une plaque de base (24.1),
-- un cadre télescopique (24.2), disposé en dessous de la plaque de base (24.1),
-- une rallonge télescopique (24.3) simple ou double, montée contre le cadre télescopique (24.2),
-- une unité de réception (24.5) montée contre la rallonge télescopique (24.3) et pouvant être déplacée séparément, qui comporte les dispositifs (23) destinés à supporter une barre de stockage (2),
-- un moteur de commande (24.4) pour la rallonge télescopique,
-- et un moteur de commande (24.6) pour l'unité de réception (24.5).

14. Stockage en rayonnages verticaux selon la revendication 13, **caractérisé par** les caractéristiques :
- une couronne d'orientation (24.8) est disposée entre la plaque de base (24.1) et le cadre télescopique (24.2),
- un moteur de commande (24.9) fait tourner la couronne d'orientation (24.8) avec les pièces (24.2, ... 24.7) fixées contre celle-ci.

15. Stockage en rayonnages verticaux selon la revendication 12, 13 ou 14, **caractérisé par** les caractéristiques :
- des plaques de centrage (24.7), formant une sorte de trémie, sont disposées à droite et à gauche de l'unité de réception (24.5),
- les dispositifs (23) destinés à supporter une barre de stockage (2) sont disposés au niveau des plaques de centrage (24.7),

16. Stockage en rayonnages verticaux selon la revendication 12, **caractérisé par** les caractéristiques :
- le bras télescopique est formé par une plaque télescopique (24') plane, qui passe au-dessus de la ou des barre(s) de stockage (2),
- des organes de préhension à crochets ou ciseaux sont prévus pour former les fixations.

17. Stockage en rayonnages verticaux selon la revendication 12, **caractérisé par** les caractéristiques :
- un dispositif de retenue et de protection (26, 27), destiné à bloquer la marchandise (1) pendant le transport, est monté contre le gerbeur (20, 20.1, 20.2),
- le dispositif de retenue et de protection comporte un volet roulant (26), une porte coulissante ou pivotante ou une grille de protection (27).

18. Stockage en rayonnages verticaux selon la revendication 12, **caractérisé par** la caractéristique :
- deux ou plusieurs bras télescopiques (24, 24') sont montés contre un gerbeur (20.2).

19. Stockage en rayonnages verticaux selon la revendication 1 ou 2, **caractérisé par** les caractéristiques :
- un joint articulé (41) est fixé contre la barre de stockage (2),
- un conteneur à claire-voie (40) est suspendu contre le joint articulé (41),
- le conteneur à claire-voie (40) comporte des fonds de stockage (43) et une porte à trappe (44).

20. Stockage en rayonnages verticaux selon la revendication 19, **caractérisé par** la caractéristique :
- un bras télescopique supplémentaire est monté contre le gerbeur (20, 20.1, 20.2), lequel passe en dessous du conteneur à claire-voie (40) et empêche ainsi un mouvement pendulaire.
